# EUROPEAN PATENT SPECIFICATION

(11) **EP 3 360 413 B1**
(45) Date of publication and mention of the grant of the patent: **17.07.2024**
(21) Application number: 17155261.5
(22) Date of filing: 08.02.2017
(51) Int. Cl.: A01N 33/04, A01N 43/40, A01P 1/00, A01N 43/80, A01N 25/22, A01N 25/02

(54) **MICROBICIDAL COMPOSITIONS BASED ON 1,2-BENZISOTHIAZOLIN-3-ONE DERIVATIVES**
MIKROBIZIDE ZUSAMMENSETZUNGEN AUF DER BASIS VON 1,2-BENZISOTHIAZOLIN-3-ON DERIVATEN
COMPOSITIONS MICROBICIDES À BASE DE DERIVES DE 1,2-BENZISOTHIAZOLIN-3-ONE

(43) Date of publication of application: 15.08.2018
(73) Proprietor: Vink Chemicals GmbH & Co. KG, 21255 Kakenstorf (DE)
(72) Inventor: KNOPF, Jennifer, 22297 Hamburg (DE); GÜCKEL, Anne, 24568 Nützen (DE); BEILFUSS, Wolfgang, 22339 Hamburg (DE); GRADTKE, Ralf, 25436 Tornesch (DE)
(74) Representative: LKGLOBAL Lorenz & Kopf Patentanwalt Attorney at Law PartG mbB

(56) References cited:
- EP-A2- 1 908 349
- WO-A2-01/92444
- US-A1- 2012 172 404
- US-A1- 2012 189 603
- US-A1- 2015 141 393

## Description

The present invention **claims** a preservative for use in technical products based on 1,2-benzisothiazolin-3-one.

Preservative preparations which comprise isothiazolin-3-ones (isothiazolone) in combination with derivatives of 2-mercaptopyridine N-oxide (pyrithione below) are known, inter alia, for use as pack preservatives. For example, a combination of 1,2-benzisothiazolone with the zinc salt of 2-mercaptopyridine N-oxide (zinc pyrithione) in water-based emulsions or dispersions is known. However, zinc pyrithione is virtually insoluble in water and organic solvents and therefore cannot be formulated with 1,2-benzisothiazolone to give clear, homogeneous concentrates. Since they have a tendency to form inhomogeneous phases and are difficult to dose, dispersions are preferably not used as pack preservatives.

EP 1 013 751 A1 discloses, in the examples, a water-soluble combination prepared from two components for use as cutting fluid which comprises 1,2-benzisothiazolone, the sodium salt of 2-mercaptopyridine N-oxide (sodium pyrithione), ethylenediamine, and sodium carbonate and sodium bromide and which is present at a pH of 11.8. Due to the content of ethylenediamine, combinations of this type are burdened with disadvantages. For example, ethylenediamine is comparatively volatile and has an unpleasant odour. Via the gas phase, it leads to a strongly alkaline medium in the surrounding area (i.e. to the risk of corrosion, e.g. for aluminium-containing materials) and can lead to discolorations in preparations. Nitrosamine formation from ethylenediamine derivatives which may form from reactions with further ingredients of microbicidal preparations is not ruled out.

EP 0 482 328 A1 discloses combinations of BIT and organic amines such as bis(aminopropyl)dodecylamine) as preservative concentrates, the components of which have a synergistic effect upon use. If no solvents are present in the preparations besides BIT and amine, then, for reasons of storage stability and on account of better handleability, the content of BIT is limited to a maximum of 10% by weight. Preparations with a higher BIT concentration can be formulated if one or more solvents are also present. The solvents proposed are water, alcohols, glycols, diglycols and polyglycols, and also ethers of glycols, diglycols and polyglycols. However, the obligatory presence of solvents other than water is undesired in certain applications.

It is thus an object of the invention to provide a composition for use in the preservation of technical products, i.e. a preservative preparation which avoids the herein above mentioned disadvantages and at the same time has a microbiological efficacy in order to be able to handle the end products free of germs. The composition must therefore have a balanced activity spectrum against bacteria, mold fungi and yeasts.

According to a first embodiments the invention relates to a composition characterized in that it consists of, for 100 weight %:
a) From 1.0 weight % to 10.0 weight % of at least one of 1,2-benzisothiazolin-3-one and its derivatives, wherein the 1,2-benzisothiazolin-3-one and its derivatives are given by the formula 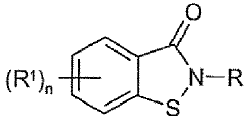 in which R is H, R¹ may be hydroxy, halogen, C₁-C₁₀-alkyl or C₁-C₁₀-alkoxy and n can be 0 to 4; if two or more radicals R¹ are present, then they can be identical or different;
b) From 0.5 weight % to 5.0 weight % of at least one of 2-mercaptopyridine N-oxide, its salts and its derivatives selected from 2,2'-dithiobis(pyridine N-oxide), and pyrione disulphide,
c) From 1.0 weight % to 6.0 weight % of N,N-bis(3-amino propyl)-dodecylamine,
d) At least one alkalinizing agent, in a concentration such that the pH is greater than 11, and
e) Water up to 100 weight %.

### a) Benzisothiazolin-3-one

Component a) of the composition according to the invention is chosen from 1,2-benzisothiazolin-3-one, its derivatives, salts and mixtures thereof. 1,2-Benzisothiazolone and preferred derivatives are given by the formula: 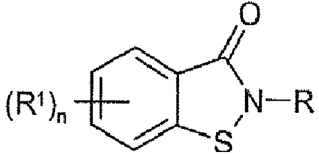 in which R is H, R¹ may be hydroxy, halogen (in particular chlorine), C₁-C₁₀-alkyl or C₁-C₁₀-alkoxy and n can be 0 to 4; if two or more radicals R¹ are present, then they can be identical or different. Compounds of this type are disclosed, inter alia, in WO 01/92444 A1. Preferred derivatives are halogen-free. According to a more particular embodiment, the invention relates to a composition as hereinbefore defined, characterized in that said at least one of 1,2-benzisothiazolin-3-one and its derivatives is 1,2-benzisothiazol-3(2H)-one (i.e. n is zero and R is H).

### b) 2-Mercaptopyridine N-oxide

Component b) of the composition according to the invention is chosen from 2-mercaptopyridine N-oxide with the formula: 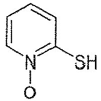 its salts and its derivatives selected from 2,2'-dithiobis(pyridine N-oxide), and pyrione disulphide. and mixtures thereof. Examples of salts of 2-mercaptopyridine N-oxide are alkali metal, alkaline earth metal and amine salts and quaternary ammonium salts, for example Na, K, Li, Ca, Mg, ammonium, 2-hydroxyethylammonium and triethylammonium salts and mixtures thereof.

According to another particular embodiment of the present invention, the composition as hereinbefore defined, is **characterized in that,** said at least one of 2-mercaptopyridine N-oxide salt is at least one alkali metal salt, at least alkaline earth metal salt or a zinc salt of 2-mercaptopyridine N-oxide or a mixture thereof. Preference is given to sodium 1-hydroxy-2-(1H)-pyridinethione also named as Natrium pyrion^{™}.

### c) N,N-bis(3-amino propyl)-dodecylamine

Such a compound is commercialized under the name Lonzabac^{™} 12 or TriameenY12D^{™}.

### d) Alkalinizing agent

Component d) of the composition according to the invention is chosen from alkali metal hydroxides such as NaOH, KOH, LiOH, alkaline earth metal hydroxides, amines, for example alkanolamines, such as ethanolamine, alkali metal carbonates, alkali metal hydrogencarbonates and alkali metal silicates (such as waterglass).

According to another particular embodiment of the present invention, the composition as hereinbefore defined, is **characterized in that,** said at least at least one alka linizing agent is at least one metal hydroxide. And more particularly, the composition as hereinbefore defined is **characterized in that,** said at least one alkalinizing agent is a mixture of sodium hydroxide and of potassium hydroxide.

The amount of alkanilizing agent is chosen in order the pH of the composition is greater than 11, particularly greater than 12.

According to a more specific embodiment, the invention relates to composition as hereinbefore defined, **characterized in that** it consists of:
a) From 3.0 weight % to 6.0 weight % of at least one of 1,2-benzisothiazolin-3-one,
b) From 0.5 weight % to 3.0 weight % of sodium 1-hydroxy-2-(1H)-pyridinethione
c) From 2.0 weight % to 5.0 weight % of N,N-bis(3-amino propyl)-dodecylamine
d) From 1.0 weight % to 5.0 weight % of a mixture of mixture of sodium hydroxide and of potassium hydroxide, and
e) Water up to 100 weight %.

If necessary, the composition as hereinbefore defined optionally contains some additives or auxiliaries, which are commonly used in its domain of use, such as surfactants, wetting agents, defoamers and stabilizers. However it is preferred that said compositon only contains components a), b), c), d) and e) without any further any additives or auxiliaries.

The composition according to the invention is characterized by the fact that they have good solubility and distributability in products with a high water content, and a high acceptance by customers and rating agencies, is cost effective and not corrosive. In addition, the components work synergistically together. Furthermore, the preparations according to the invention have good storage stability.

The invention also relates to a process for preparing the composition es hereinbefore defined, in which component b) is initially introduced into water, then component a) is added, then component d) and finally component c); to the use of the composition as hereinbefore defined, as an additive for preventing or reducing the microbicidal attack of a technical product; to a method of preventing or reducing the microbicidal attack of a technical product **characterized in that,** an effective amount of said composition is added during the preparation of said technical product.

In the context of the present invention, technicals products namely means polymer dispersions, paints, adhesives, paper coating slips, textile softening and sizing compositions, washing raw materials, cleaning and polishing compositions, washing up liquids, spinning baths, cooling lubricants, leather treatment compositions and silicone and bitumen emulsions and the like.

The advantages of the invention are particularly evident from the following examples.

### Example 1 : Preparation of a composition (A)

A compositon (A) according to the invention is prepared by mixing the stated components. The quantitative data in the following table (Table 1) refer to the amounts of active constituents. 2-mercaptopyridine N-oxide was used as the sodium salt sodium pyrithione (weight 40% strength aqueous solution), 1,2-benzisothiazolinone was used as 85 weight % strength hydrous solid. Potassium hydroxide and sodium hydroxide were in each case used as 45 weight % strength aqueous solution and N,N-bis(3-amino propyl) dodecylamine as 91 weight % strength commercial solution (Lonbazac^{™} 12).

**Table 1**

| | Composition (A) |
|---|---|
| | Proportions |
| Benzisothiazolinone (85%) | 5.60 weight% |
| Sodium 1-hydroxy-2-(1H)-pyridinethione (40%) | 2.50 weight % |
| Sodium hydroxide solution (45%) | 0.80 weight % |
| Potassium hydroxide solution (45%) | 3.25 weight % |
| N,N-bis(3-amino propyl)-dodecylamine (91%) | 3.00 weight % |
| Demineralized water | 84.85 weight % |

The composition (A) is a clear, homogeneous, slightly yellowish, aqueous preparation.

### Exemple 2 : Determination of the minimum inhibitory concentration (MIC) of the composition (A)

The determination of the MIC on the composition (A), is made according to the standard method of the German Society for Hygiene and Microbiology (DGHM) as described in J. Gebel et al.; "Standardmethoden der DGHM zur Prüfung chemischer Desinfektionverfahren", page 15-16; mph Verlag Wiesbaden Deutschland

The results are found in the following table (Table 2)

**Table 2**

| | **ATCC-/DSM-N°** | **MIC(%)** |
|---|---|---|
| **Gram negative microorganisms** | | |
| *Escherichie coli* | 11229 | 0.03 |
| *Pseudomonas aeruginosa* | 15442 | 0.06 |

| **Gram-positive microorganisms** | | |
|---|---|---|
| *Staphylococcus aureus* | 6538 | 0.03 |

| **Mould fungi** | | |
|---|---|---|
| *Aspergillus Brasiliensis* | 16404 | 0.03 |

| **Yeasts** | | |
|---|---|---|
| *Candida Albicans* | 10231 | 0.06 |

| | | |
|---|---|---|
| Composition A shows a balanced bactericidal and fungicidal activity. | | |

### Exemple 3 : Determination of the preserving effect of the composition (A) in household products.

Several batches are prepared with each 25g of the test formulation and different use concentrations of the test preservatives. An unpreserved sample is tested as a growth control. Two days after the preparation of these batches, these batches are inoculated with 0.1 ml of an inoculation solution containing a total of 10⁸-10⁹ germs/ml of the following microorganisms:

| | | | | |
|---|---|---|---|---|
| Bacteria | Gram + | | *Staphylococcus aureus* | ATCC 6538 |
| | | | *Kocuria rhizophila* | ATCC 9341 |
| | Gam - | Enterobacteria | *Enterobacter gergovia* | ATCC 33028 |
| | | | *Escherichia coli* | ATCC 11229 |
| | | | *Klebsiella pneumonia* | ATCC 4532 |
| | | Pseudomonas | *Pseudomonas aeriginosa* | ATCC 9027 |
| | | | *Pseudomonas fuorescesn* | ATCC 17397 |
| | | | *Pseudomonas putida* | ATCC 12633 |
| Yeast | | | *Candida albicans* | ATCC 10231 |
| Moulds | | | *Aspergillus brasiliensis* | ATCC 16404 |
| | | | *Penicillium funiculosum* | ATCC 36839 |

These batches are both inoculated and streaked on agar plates with neutralizer TLSH, once a week (Tryptone-soja-agar for bacteria; sabouraud-dextrose-ager for yeasts and moulds). After three days of incubation at 25°C, the microbial growth of the streak cultures are evaluated. Negative streaks are observed for another two days and evaluated again. The preserving effect of the various product concentrations is judged semiquantitatively by the growth of different streaks. The microbial growth is classified in bacteria yeast and moulds :
- means free of microbial growth;
   + means a slight growth;
   ++ means a modrate growth;
   +++ means an heavy growth.

Generally the test is perfomed for a maximum of six weeks, i.e. six inoculations cycles, respectively stopped after manifold +++ growth.

A sample is considered as well preserved, if it passes a period of six weeks at 25°C without showing microbial growth on the test batches.

The results of the evaluation is shown in Table 3.

**Table 3**

| | Sterility control | Inoculation cycles | | | | | |
|---|---|---|---|---|---|---|---|
| | | 1 | 2 | 3 | 4 | 5 | 6 |
| Dishwashing liquid aloe vera unpreserved | - | +++B | +++B | | | | |
| Dishwashing liquid aloe vera + 0.1% composition (A) | - | - | - | - | - | - | - |
| Dishwashing hand liquid unpreserved | - | ++B | ++B | +++B | +++B | | |
| Dishwashing hand liquid + 0.05% composition (A) | - | - | - | - | - | - | - |

### B: bacteria

It can be concluded that the composition (A) according to the invention is an effeicent preservative of technical products.

## Claims

1. Composition **characterized in that**, it consists of, for 100 weight %:
a) From 1.0 weight % to 10.0 weight % of at least one of 1,2-benzisothiazolin-3-one and its derivatives,
wherein the 1,2-benzisothiazolin-3-one and its derivatives are given by the formula 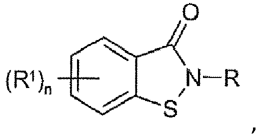
in which R is H, R¹ may be hydroxy, halogen, C₁-C₁₀-alkyl or C₁-C₁₀-alkoxy and n can be 0 to 4; if two or more radicals R¹ are present, then they can be identical or different;
b) From 0.5 weight % to 5.0 weight % of at least one of 2-mercaptopyridine N-oxide, its salts, 2,2'-dithiobis(pyridine N-oxide), and pyrione disulphide,
c) From 1.0 weight % to 6.0 weight % of N,N-bis(3-amino propyl)-dodecylamine,
d) At least one alkalinizing agent, in a concentration such that the pH is greater than 11, and
e) Water up to 100 weight %.

2. Composition according to claim 1, **characterized in that** said at least one of 1,2-benzisothiazolin-3-one and its derivatives is 1,2-benzisothiazol-3(2H)-one.

3. Composition according to anyone of claims 1 or 2, **characterized in that** said at least one of 2-mercaptopyridine N-oxide, its salts, 2,2'-dithiobis(pyridine N-oxide), and pyrione disulphide, is at least one alkali metal salt, at least alkaline earth metal salt or a zinc salt of 2-mercaptopyridine N-oxide or a mixture thereof.

4. Composition according to anyone of claims 1 to 3, **characterized in that** said at least at least one alkalinizing agent is at least one metal hydroxide.

5. Composition according to anyone of claims 1 to 4, **characterized in that** said at least one alkalinizing agent is a mixture of sodium hydroxide and of potassium hydroxide.

6. Composition according to anyone of claims 1 to 5, **characterized in that** said at least one of 2-mercaptopyridine N-oxide, its salts, 2,2'-dithiobis(pyridine N-oxide), andpyrione disulphide , is sodium 1-hydroxy-2-(1H)-pyridinethione.

7. Composition according to anyone of claims 1 to 6, **characterized in that** its pH is greater than 12.

8. Composition according to anyone of claims 1 to 7, **characterized in that** it consists of:
a) From 3.0 weight % to 6.0 weight % of at least one of 1,2-benzisothiazolin-3-one,
b) From 0.5 weight % to 3.0 weight % of sodium 1-hydroxy-2-(1H)-pyridinethione
c) From 2.0 weight % to 5.0 weight % of N,N-bis(3-amino propyl)-dodecylamine
d) From 1.0 weight % to 5.0 weight % of a mixture of mixture of sodium hydroxide and of potassium hydroxide, and
e) Water up to 100 weight %.

9. Process for preparing the composition according to anyone of claims 1 to 8, in which component b) is initially introduced into water, then component a) is added and then component d) and finally component c).

10. Use of a composition according to anyone of claims 1 to 8 as an additive for preventing or reducing the microbicidal attack of a technical product.

11. Method of preventing or reducing the microbicidal attack of a technical product, **characterized in that** an effective amount of the composition according to anyone of claims 1 to 8 is added during the preparation of said technical product.

12. Use or method according to claim 10 or to claim 11, **characterized in that** the technical product is selected from polymer dispersions, paints, adhesives, paper coating slips, textile softening and sizing compositions, washing raw materials, cleaning and polishing compositions, washing up liquids, spinning baths, cooling lubricants, leather treatment compositions and silicone and bitumen emulsions.

## Patentansprüche

1. Zusammensetzung, **dadurch gekennzeichnet, dass** sie auf 100 Gewichts-% besteht aus:
a) von 1,0 Gewichts-% bis 10,0 Gewichts-% von mindestens einem von 1,2-Benzisothiazolin-3-on und seinen Derivaten,
worin das 1,2-Benzisothiazolin-3-on und seine Derivate gegeben sind durch die Formel 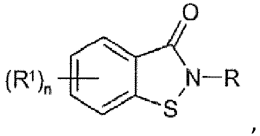
worin R H ist, R¹ Hydroxy, Halogen, C₁ -C₁₀ -Alkyl oder C₁ -C₁₀ -Alkoxy sein kann und n 0 bis 4 sein kann; wenn zwei oder mehr Radikale R¹ vorhanden sind, können sie gleich oder verschieden sein;
b) von 0,5 Gewichts-% bis 5,0 Gewichts-% von mindestens einem von 2-Mercaptopyridin-N-oxid, seinen Salzen, 2 ,2'-Dithiobis(pyridin-N-oxid) und Pyrion-Disulfid,
c) von 1,0 Gewichts-% bis 6,0 Gewichts-% N,N-Bis(3-amino-propyl)-dodecylamin,
d) mindestens einem Alkalisierungsmittel in einer solchen Konzentration, dass der pH-Wert größer als 11 ist, und
e) Wasser bis zu 100 Gewichts-%.

2. Zusammensetzung gemäß Anspruch 1, **dadurch gekennzeichnet, dass** mindestens eines von 1,2-Benzisothiazolin-3-on und seinen Derivaten 1,2-Benzisothiazol-3(2H)-on ist.

3. Zusammensetzung gemäß einem der Ansprüche 1 oder 2, **dadurch gekennzeichnet, dass** das mindestens eine von 2-Mercaptopyridin-N-oxid, seinen Salzen, 2,2'-Dithiobis(pyridin-N-oxid) oder Pyrion-Disulfid mindestens ein Alkalimetallsalz, mindestens ein Erdalkalimetallsalz oder ein Zinksalz von 2-Mercaptopyridin-N-oxid oder eine Mischung davon ist.

4. Zusammensetzung gemäß einem der Ansprüche 1 bis 3, **dadurch gekennzeichnet, dass** das mindestens eine Alkalisierungsmittel mindestens ein Metallhydroxid ist.

5. Zusammensetzung gemäß einem der Ansprüche 1 bis 4, **dadurch gekennzeichnet, dass** das mindestens eine Alkalisierungsmittel eine Mischung aus Natriumhydroxid und Kaliumhydroxid ist.

6. Zusammensetzung gemäß einem der Ansprüche 1 bis 5, **dadurch gekennzeichnet, dass** es sich bei dem mindestens einem von 2-Mercaptopyridin-N-oxid, dessen Salzen, 2,2'-Dithiobis(pyridin-N-oxid) und Pyrion-Disulfid um Natrium-1-hydroxy-2-(1H)-pyridinthion handelt.

7. Zusammensetzung gemäß einem der Ansprüche 1 bis 6, **dadurch gekennzeichnet, dass** ihr pH-Wert größer als 12 ist.

8. Zusammensetzung gemäß einem der Ansprüche 1 bis 7, **dadurch gekennzeichnet, dass** sie besteht aus:
a) von 3,0 Gewichts-% bis 6,0 Gewichts-% von mindestens einem von 1,2-Benzisothiazolin-3-on,
b) von 0,5 Gewichts-% bis 3,0 Gewichts-% Natrium-1-hydroxy-2-(1H)-pyridinthion
c) von 2,0 Gewichts-% bis 5,0 Gewichts-% N,N-Bis(3-amino-propyl)-dodecylamin
d) von 1,0 Gewichts-% bis 5,0 Gewichts-% einer Mischung aus Natriumhydroxid und Kaliumhydroxid, und
e) Wasser bis zu 100 Gewichts-%.

9. Verfahren zur Herstellung der Zusammensetzung gemäß einem der Ansprüche 1 bis 8, bei dem man zunächst die Komponente b) in Wasser eingebracht wird, dann die Komponente a) hinzugegeben wird, und dann die Komponente d), und schließlich die Komponente c).

10. Verwendung einer Zusammensetzung gemäß einem der Ansprüche 1 bis 8 als Zusatzstoff zur Verhinderung oder Verringerung des mikrobiellen Befalls eines technischen Produkts.

11. Verfahren zur Verhinderung oder Verringerung des mikrobiellen Befalls eines technischen Produkts, **dadurch gekennzeichnet, dass** eine wirksame Menge der Zusammensetzung gemäß einem der Ansprüche 1 bis 8 während der Herstellung des technischen Produkts zugesetzt wird.

12. Verwendung oder Verfahren gemäß Anspruch 10 oder 11, **dadurch gekennzeichnet, dass** das technische Produkt ausgewählt ist aus Polymerdispersionen, Farben, Klebstoffen, Papierstreichmassen, Textilweichmachern und -schlichtern, Waschrohstoffen, Reinigungs- und Poliermitteln, Waschflüssigkeiten, Spinnbädern, Kühlschmierstoffen, Lederbehandlungsmitteln und Silikon- und Bitumenemulsionen.

## Revendications

1. Composition **caractérisée en ce qu'**elle est constituée, pour 100 % en poids :
a) de 1,0 % en poids à 10,0 % en poids d'au moins un parmi la 1,2-benzisothiazolin-3-one et ses dérivés,
la 1,2-benzisothiazolin-3-one et ses dérivés étant représentés par la formule 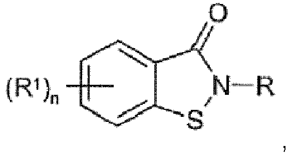
dans laquelle R est H, R¹ peut être un groupe hydroxy, un atome d'halogène, un groupe alkyle en C₁ à C₁₀ ou un groupe alcoxy en C₁ à C₁₀ et n peut valoir 0 à 4 ; si deux radicaux R¹ ou plus sont présents, alors ils peuvent être identiques ou différents ;
b) de 0,5 % en poids à 5,0 % en poids d'au moins un parmi le N-oxyde de 2-mercaptopyridine, ses sels, le 2,2'-dithiobis(N-oxyde de pyridine) et le disulfure de pyrione,
c) de 1,0 % en poids à 6,0 % en poids de N,N-bis(3-aminopropyl)-dodécylamine,
d) au moins un agent alcalinisant, en une concentration telle que le pH est supérieur à 11, et
e) de l'eau jusqu'à 100 % en poids.

2. Composition selon la revendication 1, **caractérisée en ce que** ledit au moins un parmi la 1,2-benzisothiazolin-3-one et ses dérivés est la 1,2-benzisothiazol-3(2H)-one.

3. Composition selon l'une quelconque des revendications 1 ou 2, **caractérisée en ce que** ledit au moins un parmi le N-oxyde de 2-mercaptopyridine, ses sels, le 2,2'-dithiobis(N-oxyde de pyridine) et le disulfure de pyrione est au moins un sel de métal alcalin, au moins un sel de métal alcalino-terreux ou un sel de zinc de N-oxyde de 2-mercaptopyridine ou un mélange de ceux-ci.

4. Composition selon l'une quelconque des revendications 1 à 3, **caractérisée en ce que** ledit au moins un agent alcalinisant est au moins un hydroxyde métallique.

5. Composition selon l'une quelconque des revendications 1 à 4, **caractérisée en ce que** ledit au moins un agent alcalinisant est un mélange d'hydroxyde de sodium et d'hydroxyde de potassium.

6. Composition selon l'une quelconque des revendications 1 à 5, **caractérisée en ce que** ledit au moins un parmi le N-oxyde de 2-mercaptopyridine, ses sels, le 2,2'-dithiobis(N-oxyde de pyridine) et le disulfure de pyrione est la 1-hydroxy-2-(1H)-pyridinethione de sodium.

7. Composition selon l'une quelconque des revendications 1 à 6, **caractérisée en ce que** son pH est supérieur à 12.

8. Composition selon l'une quelconque des revendications 1 à 7, **caractérisée en ce qu'**elle est constituée de :
a) de 3,0 % en poids à 6,0 % en poids d'au moins un parmi la 1,2-benzisothiazolin-3-one,
b) de 0,5 % en poids à 3,0 % en poids de 1-hydroxy-2-(1H)-pyridinethione de sodium
c) de 2,0 % en poids à 5,0 % en poids de N,N-bis(3-aminopropyl)-dodécylamine
d) de 1,0 % en poids à 5,0 % en poids d'un mélange d'hydroxyde de sodium et d'hydroxyde de potassium, et
e) de l'eau jusqu'à 100 % en poids.

9. Procédé de préparation de la composition selon l'une quelconque des revendications 1 à 8, dans lequel le composant b) est initialement introduit dans de l'eau, le composant a) est ajouté, puis le composant d) et enfin le composant c).

10. Utilisation d'une composition selon l'une quelconque des revendications 1 à 8 en tant qu'additif pour prévenir ou réduire l'attaque microbicide d'un produit technique.

11. Procédé de prévention ou réduction de l'attaque microbicide d'un produit technique, **caractérisé en ce qu'**une quantité efficace de la composition selon l'une quelconque des revendications 1 à 8 est ajoutée lors de la préparation dudit produit technique.

12. Utilisation ou procédé selon la revendication 10 ou la revendication 11, caractérisé(e) en ce que le produit technique est choisi parmi les dispersions polymères, les peintures, les adhésifs, les sauces de couchage de papier, les compositions d'assouplissement et d'encollage de textile, les matières premières de lavage, les compositions de nettoyage et de polissage, les liquides vaisselle, les bains de filage, les lubrifiants réfrigérants, les compositions de traitement du cuir et les émulsions de silicone et de bitume.
